# EUROPEAN PATENT APPLICATION

(11) **EP 3 185 042 A1**
(43) Date of publication of application: **28.06.2017**
(21) Application number: 17153571.9
(22) Date of filing: 05.03.2014
(51) Int. Cl.: G01S 19/34, G01S 19/48, G01S 19/46, G01S 19/25

(54) **METHOD AND APPARATUS FOR ENABLING THE USE OF GLOBAL NAVIGATION SATELLITE SYSTEM (GNSS) SIGNALS INDOORS**

(30) Priority: 08.03.2013 US 201313791358
(62) Divisional of application: 14713308.6
(71) Applicant: QUALCOMM Incorporated, San Diego CA 92121-1714 (US)
(72) Inventor: CHEN, Jiajian, San Diego, CA 92121 (US); DAS, Saumitra Mohan, San Diego, CA 92121 (US); CHAO, Hui, San Diego, CA 92121 (US)
(74) Representative: Schmidbauer, Andreas Konrad

(57) **Abstract**

Disclosed are apparatuses and methods for enabling the use of global navigation satellite system (GNSS) signals indoors. The method may include determining a first indoor position of the mobile device based on indoor transceiver signals. The method may also include determining, based at least in part on the determined first indoor position, that global navigation satellite system (GNSS) positioning signals are available. The method may also include determining a second indoor position of the mobile device based, at least in part, on GNSS positioning signals.

## Description

### BACKGROUND

Global Navigation Satellite System (GNSS) receivers may be used to determine an electronic device's position. The GNSS receivers receive GNSS signals, such as Global Positioning System (GPS), Galileo, Glonass or Compass signals, from GNSS satellites. Based on the received GNSS signals, an electronic device's position may be calculated. However, the GNSS signals are generally not available, or are greatly attenuated, in indoor environments, since the GNSS signals were not designed to penetrate physical structures.

In indoor environments, the electronic device may still determine its position. An electronic device may determine its position based on signals received from wireless fidelity (WiFi) access points (APs). For example, an approximate location may be determined by receiving the positions of one or more WiFi APs, and attempting to trilaterate the electronic device's position from the WI-FI APs positions. In some conditions, it may be useful to utilize GNSS signals either in addition to indoor transceiver signals, such as WiFi access point signals, or, in some situations, such as where WiFi signals or other indoor transceiver signals are unreliable or unavailable, instead of indoor transceiver signals. However, leaving an electronic device's GNSS receiver powered on despite a lack of reception, or constantly powering on an electronic device's GNSS receivers to test for GNSS satellite reception, consumes an electronic device's limited power and computing resources.

### SUMMARY

An example of a method for indoor position determination by a mobile device as described herein includes determining a first indoor position of the mobile device based on indoor transceiver signals; determining, based at least in part on the determined first indoor position, that global navigation satellite system (GNSS) positioning signals are visible; and determining a second indoor position of the mobile device based, at least in part, on GNSS positioning signals.

An example of a mobile device for enabling indoor position determination as described herein includes a memory to store a position estimation engine and a detector; a GNSS receiver; and a processor coupled with the memory and the GNSS receiver and configured to execute the position estimation engine and the detector to determine a first indoor position of the mobile device based on indoor transceiver signals, determine, based at least in part on the determined first indoor position, that global navigation satellite system (GNSS) positioning signals are visible, and determine a second indoor position of the mobile device based, at least in part, on GNSS positioning signals.

An example of a computer readable storage medium as described herein includes code for indoor position determination by a mobile device that, when executed by a processor, causes the processor to determine a first indoor position of the mobile device based on indoor transceiver signals; determine, based at least in part on the determined first indoor position, that GNSS positioning signals are visible; and determine a second indoor position of the mobile device based, at least in part, on GNSS positioning signals.

An example of a system for indoor position determination by a mobile device as described herein includes means for determining a first indoor position of the mobile device based on indoor transceiver signals; means for determining, based at least in part on the determined first indoor position, that GNSS positioning signals are visible; and means for determining a second indoor position of the mobile device based, at least in part, on GNSS positioning signals.

An example of a method for a server computer system to enable indoor position determination by a mobile device as described herein includes receiving a map of a physical structure, wherein the map includes at least data indicative of a real-world layout of the physical structure; analyzing the map to determine GNSS signal visibility data that includes at least one position relative to the map where global navigation satellite system (GNSS) positioning signals are visible to a mobile device at a corresponding real-world position within the physical structure; and providing the GNSS signal visibility data to the mobile device in response to a request from the mobile device.

An example of a server computer system to enable indoor position determination by a mobile device as described herein includes a memory to store a directory assistance engine, a structure map analysis engine, and a map of a physical structure; and a processor coupled with the memory and configured to execute the directory assistance engine and the structure map analysis engine to receive the map of a physical structure, wherein the map includes at least data indicative of a real-world layout of the physical structure, analyze the map to determine GNSS signal visibility data that includes at least one position relative to the map where global navigation satellite system (GNSS) positioning signals are visible to a mobile device at a corresponding real-world position within the physical structure, and provide the GNSS signal visibility data to the mobile device in response to a request from the mobile device.

An example of a computer readable storage medium as described herein includes code to enable indoor position determination by a mobile device, that, when executed by a processor, causes the processor to receive a map of a physical structure, wherein the map includes at least data indicative of a real-world layout of the physical structure; analyze the map to determine GNSS signal visibility data that includes at least one position relative to the map where GNSS positioning signals are visible to a mobile device at a corresponding real-world position within the physical structure; and provide the GNSS signal visibility data to the mobile device in response to a request from the mobile device.

An example of a system for a server computer system to enable indoor position determination by a mobile device as described herein includes means for receiving a map of a physical structure, wherein the map includes at least data indicative of a real-world layout of the physical structure; means for analyzing the map to determine GNSS signal visibility data that includes at least one position relative to the map where GNSS positioning signals are visible to a mobile device at a corresponding real-world position within the physical structure; and means for providing the GNSS signal visibility data to the mobile device in response to a request from the mobile device.

### BRIEF DESCRIPTION OF THE DRAWINGS

**Figure 1** is a block diagram of an exemplary system architecture for enabling the use of GNSS signals indoors;
**Figure 2** is block diagram of one embodiment of a mobile device and an assist data server;
**Figure 3A** is an example of a detailed map of the interior of a physical structure;
**Figure 3B** is another example of a detailed map of the interior of a physical structure;
**Figure 4** is a flow diagram of one embodiment of a method for indoor position determination by a mobile device.
**Figure 5A** is a flow diagram of one embodiment of a method for analyzing a map of a physical structure to determine GNSS signal visibility;
**Figure 5B** is a flow diagram of one embodiment of a method for transmitting GNSS signal visibility data to a mobile device;
**Figure 6** is a flow diagram of one embodiment of a method for enabling a mobile device to utilize GNSS signals inside a physical structure; and
**Figure 7** is a flow diagram of one embodiment of a method for refining GNSS signal visibility data.

### DETAILED DESCRIPTION

The word "exemplary" or "example" is used herein to mean "serving as an example, instance, or illustration." Any aspect or embodiment described herein as "exemplary" or as an "example" in not necessarily to be construed as preferred or advantageous over other aspects or embodiments.

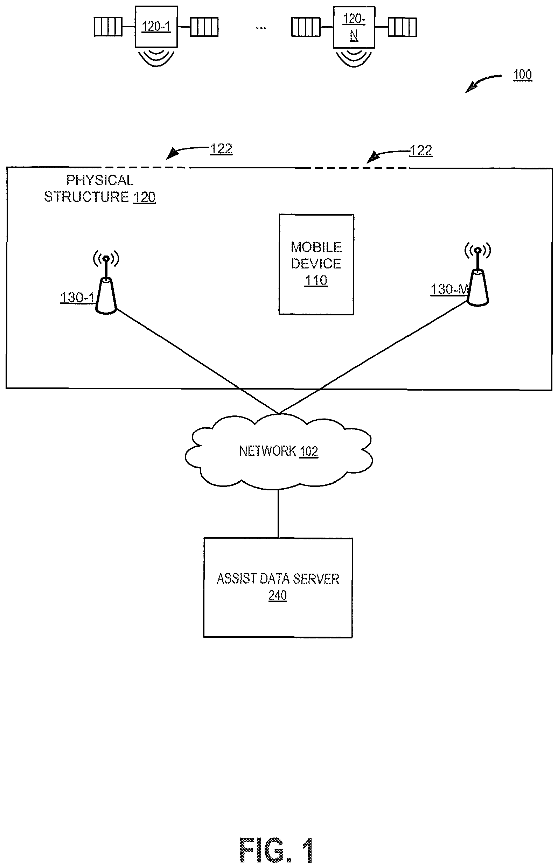

**Figure 1** is a block diagram of an exemplary system architecture 100 for enabling the use of GNSS signals indoors. In one embodiment, the system 100 includes a mobile device 110 within a physical structure 120. In one embodiment, mobile device 110 may be a mobile computing device, such as a mobile telephone, personal digital assistant, tablet computer, etc. In one embodiment, the physical structure 120 may be a shopping mall, aviary, airport, grocery store, company building, or any other physical structure.

The techniques presented herein are not restricted to the use of GNNSS data, such as GPS, Galileo, Glonass or Compass data, for satellite-based positioning. For example, the techniques provided herein may be applied to or otherwise enabled for use in various regional systems, such as, e.g., Quasi-Zenith Satellite System (QZSS) over Japan, Indian Regional Navigational Satellite System (IRNSS) over India, Beidou over China, etc., and/or various augmentation systems (e.g., an Satellite Based Augmentation System (SBAS)) that may be associated with or otherwise enabled for use with one or more global and/or regional navigation satellite systems. By way of example but not limitation, an SBAS may include an augmentation system(s) that provides integrity information, differential corrections, etc., such as, e.g., Wide Area Augmentation System (WAAS), European Geostationary Navigation Overlay Service (EGNOS), Multifunctional Satellite Augmentation System (MSAS), GPS Aided Geo Augmented Navigation or GPS and Geo Augmented Navigation system (GAGAN), and/or the like.

In one embodiment, system 100 also includes a plurality of GNSS satellites 120-1 through 120-N that transmit GNSS signals, a plurality of indoor transceivers 130-1 through 130-M, such as WiFi access points, Bluetooth transceivers, Femto cells, etc., located within physical structure 120 that provide wireless network access for devices, such as mobile device 110, to network 102, and assist data server 240 which is coupled with network 102. The assist data server 240 may also be a computing device, such as a server computer, desktop computer, etc.

The assist data server 240 and mobile device 110 may be coupled to network 102, which provides data transfer via any of the standard protocols for the exchange of information. In one embodiment, mobile device 110 is coupled with network 102 via a wireless connection provided by one of indoor transceivers 130-1 through 130-M, a cellular telephone connection, or other wireless connection. The mobile device 110 and assist data sever 240 may run on one Local Area Network (LAN) and may be incorporated into the same physical or logical system, or different physical or logical systems. Alternatively, the mobile device 110 and assist data sever 240 may reside on different LANs, wide area networks, cellular telephone networks, etc. that may be coupled together via the Internet but separated by firewalls, routers, and/or other network devices. In yet another configuration, the assist data server 240 may reside on the same server, or different servers, coupled to other devices via a public network (e.g., the Internet) or a private network (e.g., LAN). It should be noted that various other network configurations can be used including, for example, hosted configurations, distributed configurations, centralized configurations, etc.

In one embodiment, the mobile device 110 determines a real world location based on GNSS signals provided by one or more of GNSS satellites 120-1 through 120-N, and signals provided by one or more of indoor transceivers APs 130-1 through 130-M. Typically, mobile device 110 could determine its position with GNSS signals provided by GNSS satellites 120-1 through 120-N when mobile device is outside physical structure 120. Furthermore, mobile device 110 would typically determine its position with signals provided by indoor transceivers APs 130-1 through 130-M when mobile device is within physical structure 120. In one embodiment, as discussed in greater detail below, mobile device 110 activates a GNSS receiver (not shown) based on a determined location within physical structure 120 that is determined from signals transmitted by at least one of indoor transceivers 130-1 through 130-M. In one embodiment, mobile device 110 receives GNSS signals from GNSS satellites 120-1 through 120-N through portions 122 of physical structure, for example, windows, skylights, atriums or other structures which allows GNSS signals to pass through, which provide mobile device 110 visibility to one or more of GNSS Satellites 120-1 through 120-N. Upon activation of the GNSS receiver of mobile device 110, mobile device 110 determines its position based on received GNSS signals, or a combination of the GNSS signals and indoor transceiver signals.

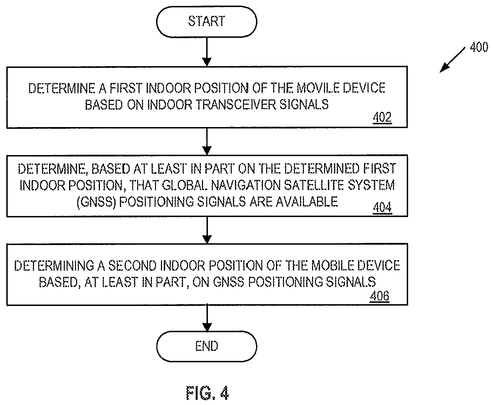

In one embodiment, when mobile device 110 determines an indoor position from signals received from one or more of indoor transceivers 130-1 through 130-M, mobile device 110 communicates the position data to assist data server 240 via network 102 as a request for indoor GNSS signal visibility. In one embodiment, assist data server 240 utilizes the received location data to determine which physical structure mobile device 110 is within. Based on the determination that mobile device is within a physical structure (i.e., physical structure 120 illustrated in Figure 1), assist data server 240 responds to mobile device 110 by transmitting mobile device 110 indoor GNSS signal visibility data. In one embodiment, the indoor GNSS signal visibility data includes data indicative of locations within physical structure 120 where GNSS signals may be receivable by mobile device 110. For example, a window, skylight, atrium, section of vertical windows, open air area, etc. may enable mobile device 110 to receive GNSS signals from one or more of GNSS satellites 120-1 through 120-N. In one embodiment, the indoor GNSS signal visibility data encodes the locations within physical structure 120 where GNSS signals may be available as location points, polygonal areas, etc. In one embodiment, the indoor GNSS signal visibility data may be generated by assist data server 240 on-the-fly in response to mobile device's 110 current location. In one embodiment, the indoor GNSS signal visibility data may be pre-generated by assist data server 240. The generation of the indoor GNSS signal visibility data is discussed in greater detail below in **Figure 4**.

In one embodiment, in response to receipt of the indoor GNSS signal visibility data, mobile device 110 determines from the indoor GNSS signal visibility data whether mobile device 110 is at a location within physical structure 120 where GNSS signals may be received. When mobile device 110 determines that it is within such an area, mobile device 110 activates its GNSS receiver (not shown) to receive GNSS signals from one or more of GNSS Satellites 120-1 through 120-N. In one embodiment, mobile device 110 utilizes the received GNSS signal to determine its real world or physical location. In one embodiment, the GNSS based signal measurements may be combined with the indoor transceiver based signal measurements to refine mobile device's 110 determined location within physical structure 120. In another embodiment, mobile device 110 may disregard a location determined from indoor transceiver signals, such as signals received from WiFi APs, and utilize only the location determined from received GNSS signal measurements or, in the alternative, determine the location only from the indoor transceiver signals, ignoring the GNSS signal measurements, or some combination of the two sets of signals based on the quality, strength, or multi-path characteristics of the received signals. Because mobile device 110 determines when to turn on and utilize its GNSS receiver based on indoor location and assist data, including GNSS signal visibility data, mobile device 110 conserves power and computing resources. That is, mobile device 110 need not periodically turn on its GNSS receiver merely to determine that no GNSS signals are available. Instead mobile device 110 activates its GNSS receiver when there is a likelihood of available GNSS signals and, in some embodiments, only when the location determined from the indoor transceivers is also below a certain accuracy threshold. Furthermore, the use of GNSS signals to supplement, enhance, or replace a location determined from indoor transceiver signals, increases the accuracy of an indoor location determined by mobile device 110 from the indoor transceiver signals alone.

In one embodiment, when mobile device 110 determines, based on the indoor GNSS signal visibility data, to activate its GNSS receiver, mobile device 110 further transmits data indicative of the success, failure, signal strength, number of satellites, which satellites were visible, and/or other GNSS signal quality related factors to assist data server 240. In one embodiment, as discussed in greater detail below, assist data server 240 refines indoor GNSS signal visibility data based on mobile device's 110 communicated results. For example, the indoor GNSS signal visibility data may be modified to reflect the lack of available satellites, or inability to obtain a GNSS signal, in order to remove, modify, move or shrink indoor GNSS signal visibility data for a location within physical structure's 120 assist data. Conversely, the indoor GNSS signal visibility data may be modified to reflect the ability of mobile device 110 to obtain a strong GNSS signal in a previously determined weak indoor reception area. In some embodiments, the satellites, received and the time of receipt can be used to refine the angle of visibility of satellite signals from a given physical location as reported within the GNSS assist data. In one embodiment, assist data server 240 receives such feedback data from a plurality of mobile devices (not shown) to perform crowd sourcing refinements of the GNSS signal visibility data over a period of time. The constant refinement of the GNSS visibility data ensures that the GNSS visibility data is accurate, up to date, and reflects real-world user results. In some embodiments, assist data server 240 may also provide GNSS assistance such as GNSS ephemeris data, almanac data, time and/or satellite constellation information. In other embodiments, a separate GNSS-capable location server (not shown), may be utilized to provide GNSS assistance such as GNSS ephemeris data, almanac data, time and/or satellite constellation information.

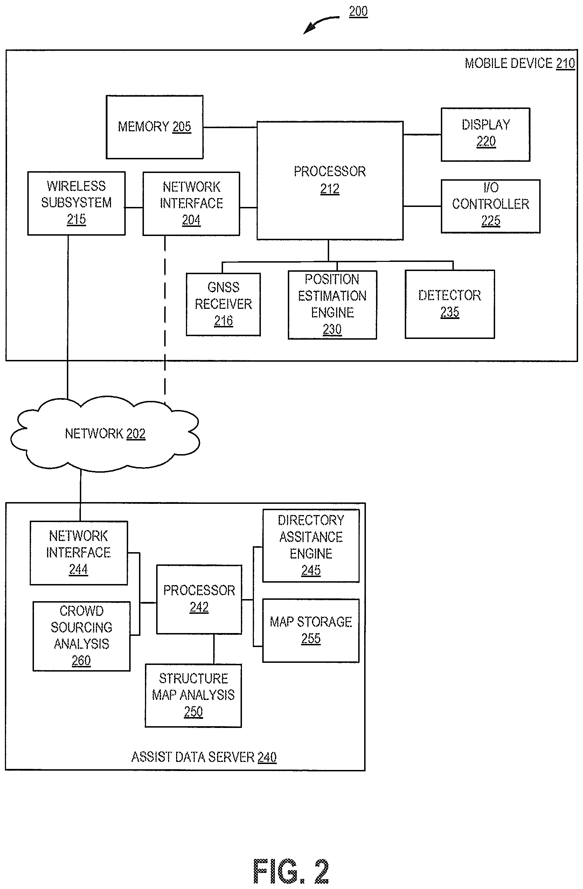

**Figure 2** is block diagram of one embodiment 200 of a mobile device and an assist data server. Mobile device 210 and assist data server 240 provide additional details for mobile device 110 and assist data server 240 discussed above in **Figure 1**.

In one embodiment, mobile device 210 is a system, which may include one or more processors 212, a memory 205, I/O controller 225, GNSS receiver 216, network interface 204, and display 220. Mobile device 210 may also include a number of processing modules, which may be implemented as hardware, software, firmware, or a combination, such as detector 235 and position estimation engine 230. It should be appreciated that mobile device 210 may also include, although not illustrated, a user interface (e.g., keyboard, touch-screen, or similar devices), a power device (e.g., a battery), as well as other components typically associated with electronic devices. Network interface 204 may also be coupled to a number of wireless subsystems 215 (e.g., Bluetooth, WiFi, Cellular, or other networks) to transmit and receive data streams through a wireless link to/from a network, or may be a wired interface for direct connection to networks (e.g., the Internet, Ethernet, or other wireless systems). In one embodiment, both network interface 204 and wireless subsystem couple mobile device 210 to network 202.

Memory 205 may be coupled to processor 212 to store instructions for execution by processor 212. In some embodiments, memory 205 is non-transitory. Memory 205 may also store one or more GNSS signal visibility data or modules (i.e., position estimation engine 230 and/or detector 235) to implement embodiments described below. It should be appreciated that embodiments as will be hereinafter described may be implemented through the execution of instructions, for example as stored in the memory 205 or other element, by processor 212 of mobile device 210 and/or other circuitry of mobile device 210 and/or other devices. Particularly, circuitry of mobile device 210, including but not limited to processor 212, may operate under the control of a program, routine, or the execution of instructions to execute methods or processes in accordance with some embodiments. For example, such a program may be implemented in firmware or software (e.g. stored in memory 205 and/or other locations) and may be implemented by processors, such as processor 212, and/or other circuitry of mobile device 210. Further, it should be appreciated that the terms processor, microprocessor, circuitry, controller, etc., may refer to any type of logic or circuitry capable of executing logic, commands, instructions, software, firmware, functionality and the like.

Further, it should be appreciated that some or all of the functions, engines or modules described herein may be performed by mobile device 210 itself and/or some or all of the functions, engines or modules described herein may be performed by another system connected through I/O controller 225 or network interface 204 (wirelessly or wired) to mobile device 210. Thus, some and/or all of the functions may be performed by another system and the results or intermediate calculations may be transferred back to mobile device 210. In some embodiments, such other device may comprise a server, such as assist data server 240 configured to process information in real time or near real time. In some embodiments, the other device is configured to predetermine the results, for example based on a known configuration of the mobile device 210.

In one embodiment, assist data server 240 is a system, which may also include one or more processors 242, map storage 255, and network interface 244. Assist data server 240 may also include a number or processing modules, which may be implemented as hardware, software, firmware, or a combination, such as directory assistance engine 245, structure map analysis 250 module, and a crowd sourcing analysis 260 module. In one embodiment, network interface 244 couples assist data server 240 to network 202. In one embodiment, processing modules of assist data server 240 may be located on a single server, as illustrated, or may be distributed among two or more servers communicatively coupled together via network 202. In some embodiments, assist data server 240 also provides locations of indoor transceivers, indoor transceiver signal-related information such as signal strength and/or round trip time, and/or other indoor-location related information. In some embodiments the information may be provided as annotations on an indoor map, also provided by assist data server 240.

In one embodiment, the mobile device 210 and assist data server 240 communicate with each other over various networks and network configurations as discussed above in **Figure 1**. In one embodiment, the interaction of mobile device 210 and assist data server 240 via network enable mobile device 210 to efficiently utilize GNSS signals when inside a physical structure.

In one embodiment, mobile device 210 receives signals from one or more indoor transceivers (not shown) that enable position estimation engine 230 to determine mobile-device's 210 indoor position. In one embodiment, because mobile device 210 is within a physical structure, GNSS receiver 216 is disabled. In one embodiment, mobile device communicates its determined indoor position to assist data server 240 via network 202. In embodiments with a separate location server (not shown), the location of the mobile device may be provided by the location server to assist data server 240 via network 202.

Assist data server 240 receives the determined indoor position of mobile device 210. Directory assistance engine 245 utilizes the indoor position to locate a map, stored in memory 255. In one embodiment, the map is a map of the physical structure that mobile device 210 is located within. Furthermore, the map includes data indicative of locations within the physical structure where GNSS signals may be available to mobile device 210. In some embodiments, the map also includes locations of indoor transceivers and/or expected signal strength and/or RTT measurements for indoor transceiver signals. In some embodiments, the map includes estimates of the size, height off of the floor and/or altitude and location of apertures as designated by physical structures, such as portions 122 of physical structure 120 illustrated in Figure 1, in addition to mobile device locations where signals passing through physical structures are visible.

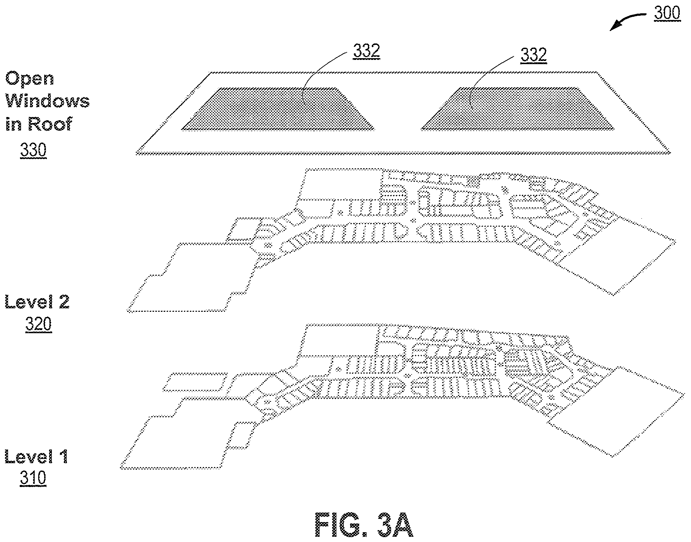

In one embodiment, the map stored in memory is pre-computed by structure map analysis 250 module. In one embodiment, an initial map that models physical structure is received by assist data server 240. In one embodiment, the initial map is a commercially available map that includes detailed data about the interior, exterior, and construction of a physical structure, such as layout, latitude and longitude of points on the map, physical dimensions of items on the map, location of stores within a structure, window locations, skylight locations, open areas, etc. In one embodiment, the map provides a detailed multi-dimensional model and/or physical description of a physical structure, in some embodiments, including the height, size and location of signal apertures, such as portions 122 of physical structure 120. An example of a detailed map 300 of the interior of a physical structure is illustrated in **Figure 3A**. The map 300 illustrates the first level 310, second level 320, and roof 330 of a shopping mall. In the illustrated embodiment, the roof 330 includes two windows 332 that would provide a view of, or line of sight to, a GNSS satellite for a mobile device located within the interior of the physical structure illustrated in map 300.

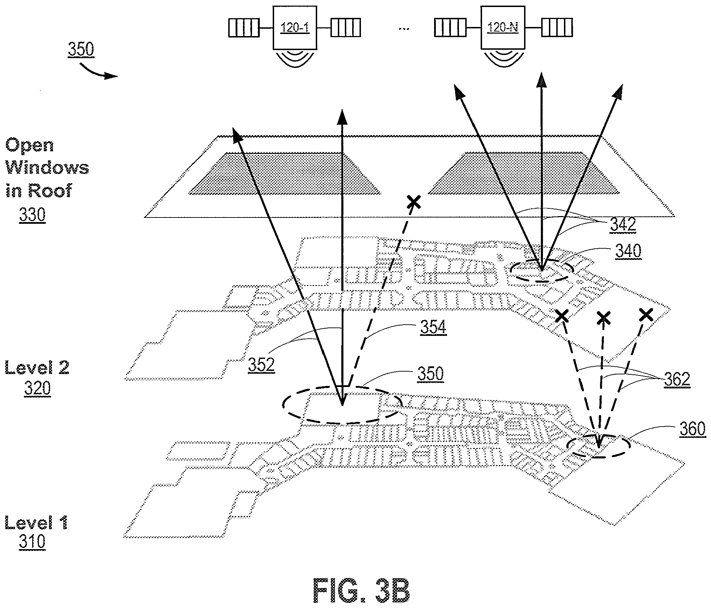

In one embodiment, structure map analysis 250 module of assist data sever 240 utilizes the map 300 to determine locations within the physical structure modeled by map 300 where GNSS signals may be available to a mobile device. In some embodiments, the assist data server 240 and/or the mobile device 210 may consider the time of day and the location of the members of the GNSS constellation, as provided by GNSS ephemeris, to predict which satellites will be visible to a given location through apertures such as the windows 332. As illustrated in **Figure 3B**, and as discussed below, area 340 and area 350 may enable a device located within those areas to receive GNSS signals from one or more GNSS satellites 120-1 through 120-N, whereas area 360 does not enable a device located within that area to receive GNSS signals. In one embodiment, structure map analysis 250 module performs ray tracing for locations on map to determine portions of the map where there is visibility of the sky. That is, the ray tracing determines where a mobile device would have visibility to the sky to enable the device to receive GNSS signals.

In one the embodiment, ray tracing is performed for each point of a grid of map, for example points in area 350. For each point in the grid, a plurality of rays are projected from the point in random directions, and traced to determine whether the ray will penetrate the structure. That is, structure map analysis 250 module determines whether each ray will pass through a window, skylight, atrium, etc. (i.e., sky penetration), or whether the ray will be blocked by a wall, roof, etc. In one embodiment, the ray tracing is a computer graphics process that is performed based on the detailed physical model and layout of the physical structure provide by map, such as the detailed physical model and layout relative to area 350. For example, ray tracing performed by structure map analysis 250 module at a grid point in area 340 may indicate that all rays 342 have sky penetration, whereas ray tracing by structure map analysis 250 module at a grid point in area 360 may indicate that all rays 362 do not have sky penetration. Furthermore, there may be locations, such as a point in area 350, where ray tracing reveals only a partial number of rays 352 achieve sky penetration, whereas some rays 354 in ray tracing do not achieve sky penetration. In one embodiment, structure map analysis 250 module stores data indicative of the locations where there is sky penetration (i.e., GNSS signals may be visible and receivable by mobile device 210), as grid points on a map. In one embodiment, the mobile device 210 analyzes whether the ray tracing data, and/or confidence levels derived from the ray tracing data, corresponds to particular satellite positions, as predicted by time and satellite ephemeris data, to determine which satellites will be visible through existing apertures and should be searched for.

In another embodiment, structure map analysis 250 module may store clusters of grid points as a polygon, where any point within the polygon has sky penetration. In one embodiment, based on results of the sky penetration analysis, a confidence level for a grid point or polygon may also be stored. For example, a grid point or polygon related with area 340, where all tracing rays achieved sky penetration, may be associated with a high confidence level, whereas a grid point or polygon related with area 350, where a portion of tracing rays achieved sky penetration, may be associated with a moderate confidence level. In one embodiment, the confidence level may be based relative to the number of tracing rays that achieve sky penetration. The grid points and/or polygons are indoor GNSS signal visibility data that provides a mobile device data indicative of where, within a physical structure, GNSS signals may be available.

In one embodiment, assist data server 240 transmits the GNSS signal visibility data (e.g., grid points or polygons relevant to a mobile device's current location), to mobile device 210. In one embodiment, the GNSS signal visibility data may be provided in a map generated from the analysis results of structure map analysis 250 module. In another embodiment, the GNSS signal visibility data may be provided in a tile, such as a rectangular, hexagonal, etc. shaped tile, which provides GNSS signal visibility data for an area of the map based on a user's estimated location. In this embodiment, the tile represents a subset of the map analyzed by structure map analysis 250 module, and transmission of the subset of GNSS signal visibility data (e.g., a tile) reduces response time and power consumption at the mobile device 210. In one embodiment, detector 235 analyzes the received indoor GNSS signal visibility data to determine whether the indoor position determined by position estimation engine 230 is within a polygon, or is covered by a sky penetration gridpoint. Where the indoor GNSS signal visibility data includes polygons, detector 235 may utilize a geometric point in a polygon test, such as using a testing ray, sign accumulation, etc. to determine if the estimated indoor location of mobile device 210 is within the polygon. Where the indoor GNSS signal visibility data is a set of grid points, detector 235 may determine whether the estimated indoor location of mobile device 210 is within a predetermined distance from the gridpoint (i.e., within 1 meter, within 2 meters, etc.).

When detector 235 determines that mobile device 210 is within a location of the interior of a physical structure where GNSS signals are available, detector activates GNSS receiver 216. GNSS receiver 216 turns on and attempts to receive GNSS signals from one or more GNSS satellites (not shown). In some embodiments, GNSS receiver 216 may also utilize GNSS ephemeris data, time and current location to determine which satellites to search for, for example, based on the likelihood that any given satellite would be visible through a particular aperture. Received GNSS signals are forwarded by GNSS receiver 216 to position estimation engine 230, which determines a GNSS-based or a hybrid GNSS and indoor terrestrial signal-based location of mobile device 210. In one embodiment, position estimation engine utilizes the GNSS based position as the location of the mobile device 210. In another embodiment, position estimation engine 230 combines the GNSS based position with the estimated indoor position determined from the indoor transceivers. In one embodiment, position estimation engine 230 uses signals from both GNSS satellites and indoor transceivers to determine a location. In one embodiment, the GNSS satellite signals may be used to compensate for directions where indoor transceivers are not available, such as toward the outside of the building, but where GNSS signals are visible through an aperture in the same direction, thereby improving the signal Dilution of Precision (DOP). The GNSS based position and/or the position estimated from the combined positioning signals enables mobile device 210 to determine a more accurate indoor position for mobile device 210 than a position that relies solely on indoor transceiver signals. Furthermore, because the GNSS receiver 216 of mobile device 210 was not activated until it was determined that mobile device 210 was located within an area of a physical structure where GNSS signals were available, power and computing resources are preserved.

In one embodiment, detector 235 further determines whether GNSS signal acquisition was successful by GNSS receiver 216. In one embodiment, detector 235 transmits data such as that indicative of the success and/or failure of GNSS signal acquisition, signal strength, number of satellites for received signals, satellite IDs for detected satellites, and/or time the satellites were detected, etc. to assist data server 240. Furthermore, detector 235 transmits data indicative of the polygon or grid point(s) relevant to the success and/or failure of the GNSS signal acquisition. Crowd sourcing analysis 260 of assist data server 240 accumulates and analyzes results received from mobile device, such as mobile device 210. In one embodiment, crowd sourcing analysis 260 refines grid point classification (i.e. GNSS signals are/are not available, signal strength, confidence rating, etc.), and refines the shape, size, and confidence rating of any polygons. Crowd sourcing analysis 260 may perform the refinement of indoor GNSS signal visibility data in real time, or near real time, as GNSS signal acquisition results are received from a plurality of mobile devices. The refined indoor GNSS signal visibility data ensures that the indoor GNSS signal visibility data is responsive to real world conditions, and reflects actual results of mobile devices.

**Figure 4** is a flow diagram of one embodiment of a method 400 for indoor position determination by a mobile device. The method 400 is performed by processing logic that may comprise hardware (circuitry, dedicated logic, etc.), software (such as is run on a general purpose computer system or a dedicated machine), firmware, or a combination. In one embodiment, the method 400 is performed by a mobile device (e.g., mobile device 110 or 210).

Referring to **Figure 4**, processing logic begins by determining a first indoor position of the mobile device based on indoor transceiver signals (processing block 402). In one embodiment, the indoor transceiver signals are signals generated by WiFi APs, Femtocells, Bluetooth transceivers, or a combination of indoor transceivers.

Processing logic determines, based at least in part on the determined first indoor position, that global navigation satellite system (GNSS) positioning signals are available (processing block 404). As will be discussed in greater detail below, in one embodiment, processing logic may request GNSS signal visibility data based on the first indoor position, and receive data indicative of GNSS signal visibility. In one embodiment, processing logic is used to analyze the received data indicative of GNSS signal visibility to determine if GNSS signals are likely to be available based at least in part on the determined first indoor position. In one embodiment, processing logic is used to analyze the received data indicative of available GNSS signals to determine the direction from which GNSS signals are likely to be available from based at least in part on the determined first indoor position and, in some embodiments, the time and satellite ephemeris information.

Processing logic then determines a second indoor position of the mobile device based, at least in part, on GNSS positioning signals (processing block 406).

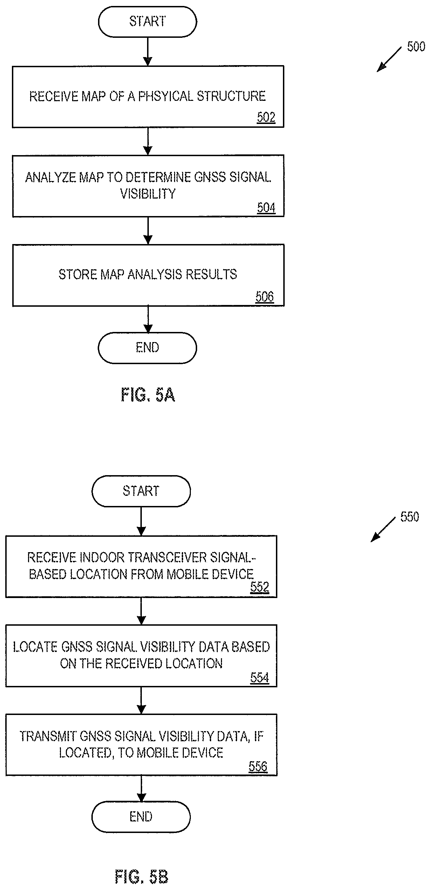

**Figure 5A** is a flow diagram of one embodiment of a method 500 for analyzing a map of a physical structure to determine GNSS signal visibility. The method 500 is performed by processing logic that may comprise hardware (circuitry, dedicated logic, etc.), software (such as is run on a general purpose computer system or a dedicated machine), firmware, or a combination. In one embodiment, the method 500 is performed by an assist data server (e.g., assist data sever 240 or 240).

Referring to **Figure 5A**, processing logic begins by receiving a map of a physical structure (processing block 502). In one embodiment, processing logic may use a map from a commercial provider of maps and mapping data or in another embodiment, the map may be provided by a venue owner or manager associated with the building that the mobile device 110 is within. As discussed above, the map may include data about a physical structure's layout, construction, points of interest, relationship between map elements (i.e., floor positioning relative to ceiling, skylight, and open areas), as well as locations of indoor transceivers, indoor transceiver signal information such as signal strength and/or RTT data, and/or location of apertures, etc. In some embodiments, the information such as data about locations of indoor transceivers, indoor transceiver signal information such as signal strength and/or RTT data, and/or location of apertures is determined by assist data server 240 or 240 based on crowd sourced signal data and/or information provided by the venue owner and/or manager.

Processing logic analyzes the map to determine GNSS signal visibility (processing block 504). In one embodiment, processing logic performs sky penetration analysis for points on the map, such as grid points distributed over floor portions of the map, grid points distributed over physically accessible locations on the map (i.e., grip points located in pedestrian walkways are analyzed, but grid points within walls, fountains, etc. are not analyzed), as well as other points on the map. In one embodiment, the sky penetration analysis performed by processing logic includes ray tracing, as discussed above. In one embodiment, ray tracing is performed for the points on the map. For each point, a plurality of rays are projected from the point in random directions, and traced to determine whether the ray will penetrate the structure, thereby indicating the potential visibility/availability of GNSS signals and, in some embodiments, the expected signal strength of those signals, or in other embodiments, whether those signals are likely to be from satellites within the line of sight of a given location and/or the expected quality and/or strength of those signals. In one embodiment, the extent of sky penetration for each point is also determined (i.e., do all rays achieve sky penetration, do no rays achieve sky penetration, or do a portion of rays achieve sky penetration).

Processing logic then stores the map analysis results (processing block 506). In one embodiment, processing logic stores data indicative of the locations where analysis indicated sky penetration on the map (i.e., GNSS signals may be receivable by a mobile device). In one embodiment, the data is stored as grid points on a map. In one embodiment, clusters of points may be stored as polygons, where any point within the polygon is determined to have at least partial sky penetration. In one embodiment, quality information, such as likelihood of GNSS signal visibility, likely signal strength, etc. is stored along with the grip points and/or polygons.

**Figure 5B** is a flow diagram of one embodiment of a method 550 for transmitting GNSS signal visibility data to a mobile device. The method 550 is performed by processing logic that may comprise hardware (circuitry, dedicated logic, etc.), software (such as is run on a general purpose computer system or a dedicated machine), firmware, or a combination. In one embodiment, the method 550 is performed by an assist data server (e.g., assist data sever 240 or 240).

Referring to **Figure 5B**, processing logic begins by receiving an indoor transceiver signal-based location, for example, a WiFi-based location, from a mobile device (processing block 552). In some embodiments, the indoor transceivers may include access points, Femto cells, Bluetooth transceivers and other indoor transceivers. In one embodiment, the indoor transceiver signal-based location is a location estimated by a mobile device from access point signals, Femto cell signals, and/or Bluetooth transceiver signals. Processing logic locates GNSS signal visibility data based on the received location (processing block 554). In one embodiment, the indoor transceiver signal-based location may be associated with one or more pre-computed maps of GNSS signal visibility data. In another embodiment, in response to receiving the indoor transceiver signal-based location from the mobile device, processing logic computes, on-the-fly, GNSS signal visibility data when the GNSS signal visibility data cannot be located. In yet another embodiment, processing logic does not attempt to locate stored GNSS signal visibility data, and instead automatically computes GNSS signal visibility data based on the received indoor transceiver signal-based mobile device location.

Processing logic transmits the GNSS signal visibility data, if any is located, to the mobile device (processing block 556). As discussed above, the GNSS signal visibility data may include points or polygons where GNSS signals are (or are likely to be) available. Furthermore, the GNSS signal visibility data includes additional quality data regarding determined GNSS signal visibility. For example, based on sky penetration analysis, points or polygons associated with GNSS signal visibility may indicate a likelihood score, signal strength prediction, etc. This GNSS signal visibility data and quality data enables a mobile device to determine whether or not to activate its GNSS receiver while within a physical structure. In addition to GNSS signal visibility data, the time, estimated location of the mobile device 110, and GNSS ephemeris data may be used to predict the identification of GNSS satellites that would be visible at any given time from an estimated location and/or aperture.

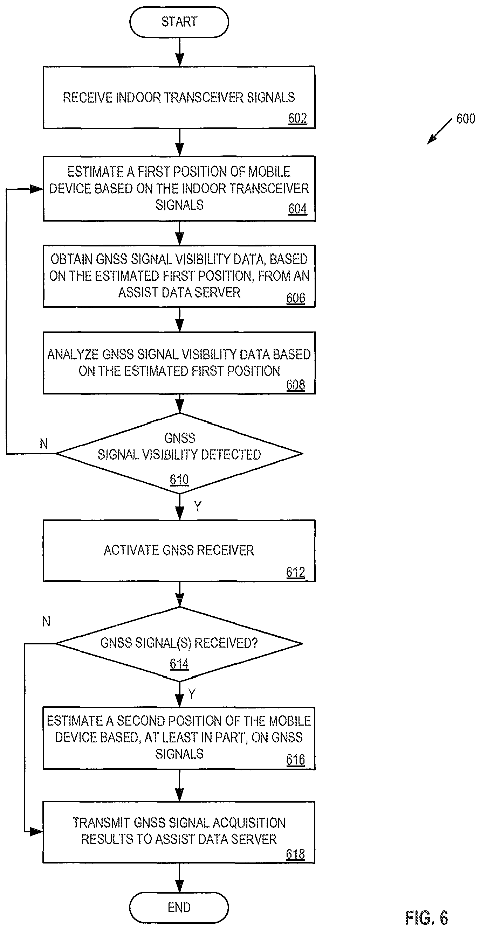

**Figure 6** is a flow diagram of one embodiment of a method 600 for enabling a mobile device to utilize GNSS signals inside a physical structure. The method 600 is performed by processing logic that may comprise hardware (circuitry, dedicated logic, etc.), software (such as is run on a general purpose computer system or a dedicated machine), firmware, or a combination. In one embodiment, the method 600 is performed by a mobile device (e.g., mobile device 110 or 210).

Referring to **Figure 6**, processing logic begins by receiving indoor transceiver signals (processing block 602). In one embodiment, indoor transceivers (such as WiFi APs) are access points that provide network access to devices within a physical structure. Furthermore, in some embodiments, indoor transceiver signals may correspond to the exchange of data of a network by a mobile device, including, in some embodiments, location data embedded within the signals.

Processing logic estimates a first position of the mobile device based on indoor transceiver signals, such as WiFi AP positioning signals (processing block 604). For example, processing logic may use relative indoor transceiver signal strengths, and/or round trip time (RTT), known positions of APs, etc. to trilaterate a position of the mobile device. Alternatively, processing logic may determine a position of the mobile device as the geometric centroid among a plurality of APs that are visible to the mobile device. In some embodiments, the position of the mobile device may be determined via a least squares fit of the available signals from GNSS satellites and/or indoor terrestrial signals.

Processing logic then obtains GNSS signal visibility data, based on the estimated first position, from an assist data server (processing block 606). As discussed above, processing logic transmits the estimated first position to an assist data server, and receives a response that includes a map, grid points, and/or polygons that correspond to locations where GNSS signals are likely to be available. Processing logic analyzes the GNSS signal visibility data based on the estimated first position (processing block 608) to determine whether GNSS signal visibility is detected and GNSS signals are likely to be available (processing block 610). In one embodiment, processing logic analyzes the GNSS signal visibility data to detect whether the first location is within a polygon of GNSS signal visibility (e.g., by use of the point in a polygon test). In one embodiment, processing logic determines whether the first location is on, or within a predetermined distance from, a point that indicates GNSS signal visibility. In some embodiments, GNSS visibility may be predicted based on current location of the mobile device and the velocity and heading of the mobile device, enabling a search for GNSS satellites to commence prior to actually reaching a location where GNSS signals may be visible.

Processing logic returns to processing block 602 to receive updated indoor transceiver signal information when GNSS signal visibility data is not available. However, processing logic activates the GNSS receiver of a mobile device when it is determined that GNSS signals are available (processing block 612). After activation of the GNSS receiver, processing logic attempts to obtain GNSS signals from one or more GNSS satellites (processing block 614). When signal data is received, processing logic estimates a second position of the mobile device based, at least in part, on the received GNSS signals (processing block 616). In one embodiment, the second GNSS-based position estimate may be combined with the indoor transceiver-based position estimate to obtain an improved mobile device position. In one embodiment the GNSS-based signal information and the indoor transceiver-based signal information may be combined to calculate an improved mobile device position. In yet another embodiment, GNSS signal quality data, which is transmitted along with the GNSS signal visibility data, and mobile device location, as discussed above, may determine how and when processing logic utilizes visible GNSS signals. For example processing logic may apply a weight to the GNSS-based position estimate or the indoor transceiver-based position estimate based on signal strength, number of satellites, etc. In an embodiment, processing logic may apply a weight to the GNSS signals or the indoor transceiver-based position estimate based on signal strength, number of satellites, etc. As another example, when GNSS signals are available, but the indicated signal strength, for any given signal, is below a minimum threshold signal strength, processing logic ignores that GNSS signal or signals with below minimum threshold signal strength.

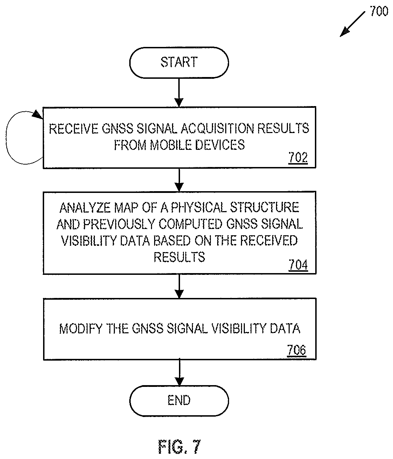

Regardless of whether or not GNSS signal data was received at processing block 614, processing logic transmits GNSS signal acquisition results to the assist data sever (processing block 618). In one embodiment, additional data, such as strength of received GNSS signals, number of satellite signals received, etc., are also transmitted to the assist data sever. As discussed below in **Figure 7**, the GNSS signal acquisition results enable an assist data server to refine GNSS signal visibility data with crowd sourcing.

Furthermore, in one embodiment, the estimate of the first position at processing block 604 may include a determination of the uncertainty associated with the first position. When the determined uncertainty is low, and processing logic has determined an accurate indoor position from indoor transceiver signals, in an alternative embodiment not illustrated, processing logic may skip the remainder of block 606-618. That is, processing logic could determine that the accuracy associated with the indoor transceiver signal-based position determination is sufficient. In this alternative embodiment, processing logic could save power associated with GNSS signal analysis and activation of a GNSS receiver. In another embodiment, the likely angle of arrival of the GNSS signals may be analyzed to determine whether inclusion of GNSS signals would be likely to improve the overall position accuracy, for example, by improving the dilution of precision of the combined signals.

**Figure 7** is a flow diagram of one embodiment of a method 700 for refining GNSS signal visibility data. The method 700 is performed by processing logic that may comprise hardware (circuitry, dedicated logic, etc.), software (such as is run on a general purpose computer system or a dedicated machine), firmware, or a combination. In one embodiment, the method 700 is performed by an assist data server (e.g., assist data sever 240 or 240).

Referring to **Figure 7**, processing logic begins by receiving GNSS signal acquisition results from mobile devices (processing block 702). In one embodiment, GNSS signal acquisition results are received in real time, or near real time, from one or more mobile devices. In one embodiment, the GNSS signal acquisition results may include additional GNSS signal quality data as discussed above.

Processing logic analyzes a map of a physical structure, the previously computed GNSS signal visibility data, and the real-world signal acquisition results received from the mobile devices (processing block 704), and modifies the GNSS signal visibility data (processing block 706). In one embodiment, processing logic is constantly receiving GNSS signal acquisition and quality data from mobile devices. This acquisition and quality data may then be correlated with GNSS signal visibility data to determine the accuracy of the GNSS signal visibility data. Based on the received real-world results, processing logic may modify the GNSS signal visibility data to reflect the real-world conditions experienced by mobile devices within a physical structure. For example, signal strength quality ratings for a given position (or polygon) may be adjusted up or down based on mobile device reports for the position (or polygon) or from nearby positions. Furthermore, polygons that correspond to visible GNSS signals may be grown, shrunk, or otherwise adapted to reflect reported GNSS signal acquisition and quality results, such as those from both within the polygon and those from nearby positions. In one embodiment, the sourcing of the real-time and real-world results from different mobile devices ensures the accuracy of reported GNSS signal visibility data as well as, in some embodiments, its applicability to a different GNSS receivers.

In an alternative embodiment, the processing logic discussed above in Figure 7 that performs crowd sourcing may also be performed at a mobile device, such as mobile device 110 or 210. In this embodiment, processing logic at the mobile device could perform processing blocks 704 and 706 to analyze real-world GNSS signal acquisition results, modify GNSS singal visibility data, and transmit results to an assist data sever.

It should be appreciated that when the devices discussed herein is a mobile or wireless device, that it may communicate via one or more wireless communication links through a wireless network that are based on or otherwise support any suitable wireless communication technology. For example, in some aspects computing device or server may associate with a network including a wireless network. In some aspects the network may comprise a body area network or a personal area network (e.g., an ultra-wideband network). In some aspects the network may comprise a local area network or a wide area network. A wireless device may support or otherwise use one or more of a variety of wireless communication technologies, protocols, or standards such as, for example, CDMA, TDMA, OFDM, OFDMA, WiMAX, LTE, and Wi-Fi. Similarly, a wireless device may support or otherwise use one or more of a variety of corresponding modulation or multiplexing schemes. A mobile wireless device may wirelessly communicate with other mobile devices, cell phones, other wired and wireless computers, Internet web-sites, etc.

The teachings herein may be incorporated into (e.g., implemented within or performed by) a variety of apparatuses (e.g., devices). For example, one or more aspects taught herein may be incorporated into a phone (e.g., a cellular phone), a personal data assistant (PDA), a tablet, a mobile computer, a laptop computer, a tablet, an entertainment device (e.g., a music or video device), a headset (e.g., headphones, an earpiece, etc.), a medical device (e.g., a biometric sensor, a heart rate monitor, a pedometer, an Electrocardiography (EKG) device, etc.), a user I/O device, a computer, a server, a point-of-sale device, an entertainment device, a set-top box, or any other suitable device. These devices may have different power and data requirements and may result in different power profiles generated for each feature or set of features.

In some aspects a wireless device may comprise an access device (e.g., a Wi-Fi access point) for a communication system. Such an access device may provide, for example, connectivity to another network (e.g., a wide area network such as the Internet or a cellular network) via a wired or wireless communication link. Accordingly, the access device may enable another device (e.g., a Wi-Fi station) to access the other network or some other functionality. In addition, it should be appreciated that one or both of the devices may be portable or, in some cases, relatively non-portable.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary embodiments, the functions described may be implemented in hardware, software, firmware, or any combination thereof. If implemented in software as a computer program product, the functions may be stored on or transmitted over as one or more instructions or code on a non-transitory computer-readable medium. Computer-readable media can include both computer storage media and communication media including any medium that facilitates transfer of a computer program from one place to another. A storage media may be any available media that can be accessed by a computer. By way of example, and not limitation, such non-transitory computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a web site, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of non-transitory computer-readable media.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

### Further Summary of the Invention

1. A method for indoor position determination by a mobile device, the method comprising:
   determining a first indoor position of the mobile device based on indoor transceiver signals;
   determining, based at least in part on the determined first indoor position, that global navigation satellite system (GNSS) positioning signals are visible; and
   determining a second indoor position of the mobile device based, at least in part, on GNSS positioning signals.
2. The method of 1, wherein the first indoor position and the second indoor position are positions of the mobile device inside a physical structure, and the indoor transceiver signals and the GNSS positioning signals are received by the mobile device within the physical structure.
3. The method of 1, further comprising:
   determining an updated indoor position of the mobile device, the updated indoor position based on the second indoor position determined from the GNSS positioning signals and the first indoor position determined from the indoor transceiver signals.
4. The method of 3, wherein the updated indoor position is a weighted average of the second indoor position and the first indoor position, wherein weighting of the second indoor position and the first indoor position is based on a strength of received GNSS positioning signals.
5. The method of 1, further comprising:
   determining an updated indoor position of the mobile device, the updated indoor position calculated using both GNSS positioning signals and indoor transceiver signals.
6. The method of 5, wherein the updated indoor position is determined with both the GNSS positioning signals and the indoor transceiver signals when inclusion of the GNSS positioning signals in the determination of the updated indoor position of the mobile device would improve a dilution of precision of a combination of the GNSS positioning signals and the indoor transceiver signals.
7. The method of 1, wherein determining that GNSS positioning signals are visible, further comprises:
   requesting GNSS signal visibility data by the mobile device, wherein the GNSS signal visibility data includes data that is indicative of one or more indoor positions within a physical structure where GNSS signals may be visible;
   receiving the requested GNSS signal visibility data at the mobile device;
   determining that the GNSS positioning signals are visible by determining the first indoor position of the mobile device is proximate to at least one of the one or more indoor positions within the physical structure;
   activating a GNSS receiver of the mobile device in response to determining that the GNSS positioning signals are visible; and
   receiving GNSS positioning signals with the GNSS receiver.
8. The method of 7, wherein the GNSS signal visibility data comprises at least a portion of a map of an interior of a physical structure with pre-computed polygonal areas embedded in the map, where an interior region of the pre-computed polygonal areas is indicative of a location within the physical structure where GNSS signals are visible.
9. The method of 7, wherein GNSS signal visibility data comprises one or more grid points that correspond to at least a portion of a map of an interior of a physical structure, where each grid point includes data indicative of whether GNSS signals are visible at the grid point within the physical structure.
10. The method of 7, further comprising:
   transmitting results of receipt of GNSS positioning signals to an assist data server, the assist data server to modify the GNSS signal visibility data based on actual GNSS signal reception results of the mobile device.
11. The method of 1, wherein the first indoor position is determined based on signals received from one or more indoor transceivers that include one or more wireless access points, Femtocells, and Bluetooth transceivers.
12. The method of 1, wherein determining the first indoor position further comprises:
   determining an uncertainty associated with the determined first position; and
   when the determined uncertainty indicates an accurate indoor position has been estimated from the indoor transceiver signals, use on the first indoor position as an indoor position of the mobile device without use of GNSS positioning signals.
13. A mobile device for enabling indoor position determination, the mobile device comprising:
   a memory to store a position estimation engine and a detector;
   a global navigation satellite system (GNSS) receiver; and
   a processor coupled with the memory and the GNSS receiver and configured to execute the position estimation engine and the detector to
      determine a first indoor position of the mobile device based on indoor transceiver signals,
      determine, based at least in part on the determined first indoor position, that global navigation satellite system (GNSS) positioning signals are visible, and
      determine a second indoor position of the mobile device based, at least in part, on GNSS positioning signals.
14. The mobile device of 13, wherein the first indoor position and the second indoor position are positions of the mobile device inside a physical structure, and the indoor transceiver signals and the GNSS positioning signals are received by the mobile device within the physical structure.
15. The mobile device of 13, wherein the processor is further configured to determine an updated indoor position of the mobile device, the updated indoor position based on the second indoor position determined from the GNSS positioning signals and the first indoor position determined from the indoor transceiver signals.
16. The mobile device of 15, wherein the updated indoor position is a weighted average of the second indoor position and the first indoor position, wherein weighting of the second indoor position and the first indoor position is based on a strength of received GNSS positioning signals.
17. The mobile device of 13, wherein the processor is further configured to determine an updated indoor position of the mobile device, the updated indoor position calculated using both GNSS positioning signals and indoor transceiver signals.
18. The mobile device of 17, where the updated indoor position is determined with both the GNSS positioning signals and the indoor transceiver signals when inclusion of the GNSS positioning signals in the determination of the updated indoor position of the mobile device would improve a dilution of precision of a combination of the GNSS positioning signals and the indoor transceiver signals.
19. The mobile device of 13, wherein the processor is configured to determine that GNSS positioning signals are visible by
   requesting GNSS signal visibility data by the mobile device, wherein the GNSS signal visibility data includes data that is indicative of one or more indoor positions within a physical structure where GNSS signals may be visible,
   receiving the requested GNSS signal visibility data at the mobile device;
   determining that the GNSS positioning signals are visible by determining the first indoor position of the mobile device is proximate to at least one of the one or more indoor positions within the physical structure,
   activating a GNSS receiver of the mobile device in response to determining that the GNSS positioning signals are visible, and
   receiving GNSS positioning signals with the GNSS receiver.
20. The mobile device of 19, wherein the GNSS signal visibility data comprises at least a portion of a map of an interior of a physical structure with pre-computed polygonal areas embedded in the map, where an interior region of the pre-computed polygonal areas is indicative of a location within the physical structure where GNSS signals are visible.
21. The mobile device of 19, wherein GNSS signal visibility data comprises one or more grid points that correspond to at least a portion of a map of an interior of a physical structure, where each grid point includes data indicative of whether GNSS signals are visible at the grid point within the physical structure.
22. The mobile device of 19, wherein the processor is further configured to transmit results of receipt of GNSS positioning signals to an assist data server, and wherein the assist data server modifies the GNSS signal visibility data based on actual GNSS signal reception results of the mobile device.
23. The mobile device of 13, wherein the first indoor position is determined based on signals received from one or more indoor transceivers that include one or more wireless access points, Femtocells, and Bluetooth transceivers.
24. The mobile device of 13, wherein the processor is configured to determine the first indoor position by
   determining an uncertainty associated with the determined first position, and
   when the determined uncertainty indicates an accurate indoor position has been estimated from the indoor transceiver signals, using the first indoor position as an indoor position of the mobile device without use of GNSS positioning signals.
25. A computer readable storage medium including code for indoor position determination by a mobile device that, when executed by a processor, causes the processor to:
   determine a first indoor position of the mobile device based on indoor transceiver signals;
   determine, based at least in part on the determined first indoor position, that global navigation satellite system (GNSS) positioning signals are visible; and
   determine a second indoor position of the mobile device based, at least in part, on GNSS positioning signals.
26. The computer readable storage medium of 25, wherein the first indoor position and the second indoor position are positions of the mobile device inside a physical structure, and the indoor transceiver signals and the GNSS positioning signals are received by the mobile device within the physical structure.
27. The computer readable storage medium of 25, further comprising code that causes the processor to:
   determine an updated indoor position of the mobile device, the updated indoor position based on the second indoor position determined from the GNSS positioning signals and the first indoor position determined from the indoor transceiver signals.
28. The computer readable storage medium of 25, wherein the code that causes the processor to determine that GNSS positioning signals are visible, further comprises code that causes the processor to:
   request GNSS signal visibility data by the mobile device, wherein the GNSS signal visibility data includes data that is indicative of one or more indoor positions within a physical structure where GNSS signals may be visible;
   receive the requested GNSS signal visibility data at the mobile device;
   determine that the GNSS positioning signals are visible by determining the first indoor position of the mobile device is proximate to at least one of the one or more indoor positions within the physical structure;
   activate a GNSS receiver of the mobile device in response to determining that the GNSS positioning signals are visible; and
   receive GNSS positioning signals with the GNSS receiver.
29. The computer readable storage medium of 28, further comprising code that causes the processor to:
   transmit results of receipt of GNSS positioning signals to an assist data server, the assist data server to modify the GNSS signal visibility data based on actual GNSS signal reception results of the mobile device.
30. A system for indoor position determination by a mobile device, the system comprising:
   means for determining a first indoor position of the mobile device based on indoor transceiver signals;
   means for determining, based at least in part on the determined first indoor position, that global navigation satellite system (GNSS) positioning signals are visible; and
   means for determining a second indoor position of the mobile device based, at least in part, on GNSS positioning signals.
31. The system of 30, wherein the first indoor position and the second indoor position are positions of the mobile device inside a physical structure, and the indoor transceiver signals and the GNSS positioning signals are received by the mobile device within the physical structure.
32. The system of 30, further comprising:
   means for determining an updated indoor position of the mobile device, the updated indoor position based on the second indoor position determined from the GNSS positioning signals and the first indoor position determined from the indoor transceiver signals.
33. The system of 30, wherein means for determining that GNSS positioning signals are visible, further comprises:
   means for requesting GNSS signal visibility data by the mobile device, wherein the GNSS signal visibility data includes data that is indicative of one or more indoor positions within a physical structure where GNSS signals may be visible;
   means for receiving the requested GNSS signal visibility data at the mobile device;
   means for determining that the GNSS positioning signals are visible by determining the first indoor position of the mobile device is proximate to at least one of the one or more indoor positions within the physical structure;
   means for activating a GNSS receiver of the mobile device in response to determining that the GNSS positioning signals are visible; and
   means for receiving GNSS positioning signals with the GNSS receiver.
34. The system of 33, further comprising:
   means for transmitting results of receipt of GNSS positioning signals to an assist data server, the assist data server to modify the GNSS signal visibility data based on actual GNSS signal reception results of the mobile device.
35. A method for a server computer system to enable indoor position determination by a mobile device, the method comprising:
   receiving a map of a physical structure, wherein the map includes at least data indicative of a real-world layout of the physical structure;
   analyzing the map to determine GNSS signal visibility data that includes at least one position relative to the map where global navigation satellite system (GNSS) positioning signals are visible to a mobile device at a corresponding real-world position within the physical structure; and
   providing the GNSS signal visibility data to the mobile device in response to a request from the mobile device.
36. The method of 35, wherein the request indicates that the mobile device is inside the physical structure and proximate to a real-world position within the physical structure corresponding to the at least one position
37. The method of 36, further comprising:
   receiving GNSS signal acquisition results from the mobile device relative to the at least one position, the GNSS signal acquisition results indicative of at least a success or a failure of the mobile device to receive a GNSS positioning signal at the at least one position; and
   modifying GNSS positioning visibility data for the at least one position based one the GNSS signal acquisition results.
38. The method of 35, wherein analyzing the map to determine GNSS signal visibility data, further comprises:
   performing sky penetration analysis on the map at the at least one position to determine whether one or more tracing rays projected from the at least one position will penetrate the physical structure.
39. The method of 37, wherein a plurality of tracing rays are projected at random directions from the at least one position, and a number of tracing rays that penetrate the physical structure, compared with a total number of tracing rays, indicates a level of GNSS signal availability at the at least one position.
40. The method of 37, wherein a plurality of positions relative to the map are analyzed to determine one or more polygonal areas, wherein an interior region of a polygonal area is indicative of a region within the physical structure where GNSS signals are visible.
41. The method of 35, wherein analysis of the map to determine GNSS signal visibility data is performed prior to receipt of the request from the mobile device.
42. The method of 35, wherein analysis of the map to determine GNSS signal visibility data is performed in response to receipt of the request from the mobile device, wherein the request indicates that the mobile device is within the physical structure and proximate to the at least one position.
43. A server computer system to enable indoor position determination by a mobile device, the server computer system comprising:
   a memory to store a directory assistance engine, a structure map analysis engine, and a map of a physical structure; and
   a processor coupled with the memory and configured to execute the directory assistance engine and the structure map analysis engine to
      receive the map of a physical structure, wherein the map includes at least data indicative of a real-world layout of the physical structure,
      analyze the map to determine GNSS signal visibility data that includes at least one position relative to the map where global navigation satellite system (GNSS) positioning signals are visible to a mobile device at a corresponding real-world position within the physical structure, and
      provide the GNSS signal visibility data to the mobile device in response to a request from the mobile device.
44. The server computer system of 43, wherein the request indicates that the mobile device is inside the physical structure and proximate to a real-world position within the physical structure corresponding to the at least one position
45. The server computer system of 44, wherein the memory further stores a crowd sourcing analysis engine, and the processor is further configured to execute the crowd sourcing analysis engine to
   receive GNSS signal acquisition results from the mobile device relative to the at least one position, the GNSS signal acquisition results indicative of at least a success or a failure of the mobile device to receive a GNSS positioning signal at the at least one position, and
   modify GNSS positioning visibility data for the at least one position based one the GNSS signal acquisition results.
46. The server computer system of 43, wherein the processor is further configured to analyze the map to determine GNSS signal visibility data by performing sky penetration analysis on the map at the at least one position to determine whether one or more tracing rays projected from the at least one position will penetrate the physical structure.
47. The server computer system of 43, wherein a plurality of tracing rays are projected at random directions from the at least one position, and a number of tracing rays that penetrate the physical structure, compared with a total number of tracing rays, indicates a level of GNSS signal availability at the at least one position.
48. The server computer system of 43, wherein a plurality of positions relative to the map are analyzed to determine one or more polygonal areas, wherein an interior region of a polygonal area is indicative of a region within the physical structure where GNSS signals are visible.
49. The server computer system of 43, wherein analysis of the map to determine GNSS signal visibility data is performed prior to receipt of the request from the mobile device.
50. The server computer system of 43, wherein analysis of the map to determine GNSS signal visibility data is performed in response to receipt of the request from the mobile device, wherein the request indicates that the mobile device is within the physical structure and proximate to the at least one position.
51. A computer readable storage medium including code, to enable indoor position determination by a mobile device, that, when executed by a processor, causes the processor to:
   receive a map of a physical structure, wherein the map includes at least data indicative of a real-world layout of the physical structure;
   analyze the map to determine GNSS signal visibility data that includes at least one position relative to the map where global navigation satellite system (GNSS) positioning signals are visible to a mobile device at a corresponding real-world position within the physical structure; and
   provide the GNSS signal visibility data to the mobile device in response to a request from the mobile device.
52. The computer readable storage medium of 51, wherein the request indicates that the mobile device is inside the physical structure and proximate to a real-world position within the physical structure corresponding to the at least one position
53. The computer readable storage medium of 51, further comprising code that, when executed by the processor, causes the processor to:
   receive GNSS signal acquisition results from the mobile device relative to the at least one position, the GNSS signal acquisition results indicative of at least a success or a failure of the mobile device to receive a GNSS positioning signal at the at least one position; and
   modify GNSS positioning visibility data for the at least one position based one the GNSS signal acquisition results.
54. The computer readable storage medium of 51, wherein analysis of the map to determine GNSS signal visibility data is performed prior to receipt of the request from the mobile device.
55. The computer readable storage medium of 51, wherein analysis of the map to determine GNSS signal visibility data is performed in response to receipt of the request from the mobile device, wherein the request indicates that the mobile device is within the physical structure and proximate to the at least one position.
56. A system for a server computer system to enable indoor position determination by a mobile device, the system comprising:
   means for receiving a map of a physical structure, wherein the map includes at least data indicative of a real-world layout of the physical structure;
   means for analyzing the map to determine GNSS signal visibility data that includes at least one position relative to the map where global navigation satellite system (GNSS) positioning signals are visible to a mobile device at a corresponding real-world position within the physical structure; and
   means for providing the GNSS signal visibility data to the mobile device in response to a request from the mobile device.
57. The system of 56, wherein the request indicates that the mobile device is inside the physical structure and proximate to a real-world position within the physical structure corresponding to the at least one position
58. The system of 56, further comprising:
   means for receiving GNSS signal acquisition results from the mobile device relative to the at least one position, the GNSS signal acquisition results indicative of at least a success or a failure of the mobile device to receive a GNSS positioning signal at the at least one position; and
   means for modifying GNSS positioning visibility data for the at least one position based one the GNSS signal acquisition results.
59. The system of 56, wherein analysis of the map to determine GNSS signal visibility data is performed prior to receipt of the request from the mobile device.
60. The system of 56, wherein analysis of the map to determine GNSS signal visibility data is performed in response to receipt of the request from the mobile device, wherein the request indicates that the mobile device is within the physical structure and proximate to the at least one position.

## Claims

1. A method for a server computer system (240) to enable indoor position determination by a mobile device (110, 210), the method comprising:
receiving a map of a physical structure (120), wherein the map includes at least data indicative of a real-world layout of the physical structure;
analyzing the map to determine GNSS signal visibility data that includes at least one position relative to the map where global navigation satellite system, GNSS, positioning signals are visible to a mobile device at a corresponding real-world position within the physical structure; and
providing the GNSS signal visibility data to the mobile device in response to a request from the mobile device.

2. The method of claim 1, wherein the request indicates that the mobile device is inside the physical structure and proximate to a real-world position within the physical structure corresponding to the at least one position

3. The method of claim 2, further comprising:
receiving GNSS signal acquisition results from the mobile device relative to the at least one position, the GNSS signal acquisition results indicative of at least a success or a failure of the mobile device to receive a GNSS positioning signal at the at least one position; and
modifying GNSS positioning visibility data for the at least one position based one the GNSS signal acquisition results.

4. The method of claim 1, wherein analyzing the map to determine GNSS signal visibility data, further comprises:
performing sky penetration analysis on the map at the at least one position to determine whether one or more tracing rays projected from the at least one position will penetrate the physical structure.

5. The method of claim 3, wherein a plurality of tracing rays are projected at random directions from the at least one position, and a number of tracing rays that penetrate the physical structure, compared with a total number of tracing rays, indicates a level of GNSS signal availability at the at least one position.

6. The method of claim 3, wherein a plurality of positions relative to the map are analyzed to determine one or more polygonal areas, wherein an interior region of a polygonal area is indicative of a region within the physical structure where GNSS signals are visible.

7. The method of claim 1, wherein analysis of the map to determine GNSS signal visibility data is performed prior to receipt of the request from the mobile device.

8. The method of claim 1, wherein analysis of the map to determine GNSS signal visibility data is performed in response to receipt of the request from the mobile device, wherein the request indicates that the mobile device is within the physical structure and proximate to the at least one position.

9. A server computer system (240) to enable indoor position determination by a mobile device (110, 210), the server computer system comprising:
a memory to store a directory assistance engine, a structure map analysis engine, and a map of a physical structure; and
a processor coupled with the memory and configured to execute the directory assistance engine and the structure map analysis engine to carry out the method of any of claims 1-8.

10. A computer readable storage medium including code, to enable indoor position determination by a mobile device, that, when executed by a processor, causes the processor to carry out the method of any of claims 1-8.

11. A system for a server computer system to enable indoor position determination by a mobile device, the system comprising:
means for receiving a map of a physical structure, wherein the map includes at least data indicative of a real-world layout of the physical structure;
means for analyzing the map to determine GNSS signal visibility data that includes at least one position relative to the map where global navigation satellite system, GNSS, positioning signals are visible to a mobile device at a corresponding real-world position within the physical structure; and
means for providing the GNSS signal visibility data to the mobile device in response to a request from the mobile device.

12. The system of claim 11, wherein the request indicates that the mobile device is inside the physical structure and proximate to a real-world position within the physical structure corresponding to the at least one position

13. The system of claim 11, further comprising:
means for receiving GNSS signal acquisition results from the mobile device relative to the at least one position, the GNSS signal acquisition results indicative of at least a success or a failure of the mobile device to receive a GNSS positioning signal at the at least one position; and
means for modifying GNSS positioning visibility data for the at least one position based one the GNSS signal acquisition results.

14. The system of claim 11, wherein analysis of the map to determine GNSS signal visibility data is performed prior to receipt of the request from the mobile device.

15. The system of claim 11, wherein analysis of the map to determine GNSS signal visibility data is performed in response to receipt of the request from the mobile device, wherein the request indicates that the mobile device is within the physical structure and proximate to the at least one position.
